(19) Europäisches Patentamt / European Patent Office / Office européen des brevets

(11) **EP 2 950 957 B1**

(12) **FASCICULE DE BREVET EUROPEEN**

(45) Date de publication et mention de la délivrance du brevet:
**06.01.2021 Bulletin 2021/01**

(21) Numéro de dépôt: **14704852.4**

(22) Date de dépôt: **27.01.2014**

(51) Int Cl.:
**B23D 37/00** *(2006.01)* **B23D 43/02** *(2006.01)*

(86) Numéro de dépôt international:
**PCT/FR2014/050144**

(87) Numéro de publication internationale:
**WO 2014/118459 (07.08.2014 Gazette 2014/32)**

(54) **PROCÉDÉ DE BROCHAGE D'ALVÉOLES POUR DES PIÈCES TELLES QUE DES DISQUES DE ROTOR DE TURBINE OU DES DISQUES DE COMPRESSEUR DE TURBOMACHINE**

VERFAHREN ZUM RÄUMEN VON STECKPLÄTZEN FÜR TURBINENROTOREN ODER TURBOMACHINENKOMPRESSORSCHEIBEN

METHOD FOR BROACHING SLOTS FOR TURBINE ROTORS OR TURBO-MACHINE COMPRESSOR DISCS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **01.02.2013 FR 1350893**

(43) Date de publication de la demande:
**09.12.2015 Bulletin 2015/50**

(73) Titulaire: **Safran Helicopter Engines**
**64510 Bordes (FR)**

(72) Inventeurs:
• **MANDRILE, Sébastien**
**F-83340 Le Thoronet (FR)**
• **CAZENAVE-LARROCHE, Gilles**
**F-64320 Idron (FR)**

• **VERNAULT, Cyril**
**F-64510 Boeil-Bezing (FR)**
• **DESSEIN, Gilles**
**F-65320 Gardères (FR)**
• **DENAPE, Jean**
**F-64140 Lons (FR)**
• **PARIS, Jean-Yves**
**F-65490 Oursbelille (FR)**

(74) Mandataire: **Regimbeau**
**20, rue de Chazelles**
**75847 Paris Cedex 17 (FR)**

(56) Documents cités:
EP-A1- 2 153 925       GB-A- 831 538
GB-A- 839 708          US-A- 2 870 688
US-A1- 2003 091 399

## Description

### DOMAINE TECHNIQUE GÉNÉRAL ET ART ANTÉRIEUR

La présente invention est relative au brochage d'alvéoles pour des pièces telles que des disques de rotors de turbines ou des disques de compresseurs de turbomachine.

Elle trouve notamment application pour le brochage d'alvéoles du type « pieds de sapin » ou de « bulbes » pour des disques de rotors ou de compresseurs de turbomoteur ou turbopropulseur d'aéronef.

Classiquement, un turbomoteur ou turbopropulseur d'aéronef comprend une partie compresseur et une turbine rotative. Cette turbine comprend elle-même un disque de rotor qui présente des attaches périphériques (alvéoles dites en forme de « pieds de sapin » ou de « bulbes ») qui sont réparties sur sa circonférence et qui reçoivent et maintiennent les pieds des pales de ladite turbine. Certains disques de compresseurs comportent également de telles attaches.

Ces attaches sont généralement usinées par brochage.

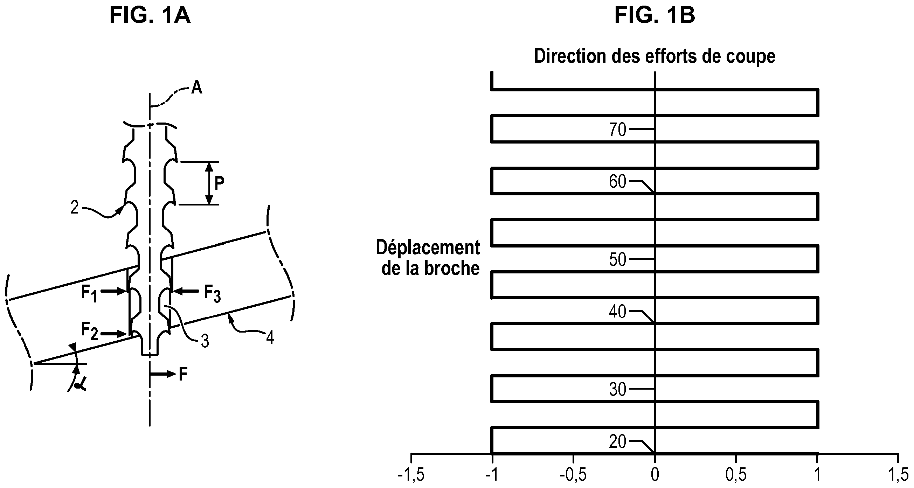

A cet effet, ainsi qu'illustré sur la figure 1A, on réalise, au moyen d'un jeu de broches 1, plusieurs passes dans une alvéole 3 à usiner.

Dans le cas des alvéoles 3 en « pieds de sapin » ou en forme de « bulbes » à la périphérie d'un disque de rotor 4 de turbine de turbomachine ou d'un disque de compresseur, le brochage est souvent réalisé avec une certaine inclinaison (angle α de brochage sur la figure 1A). De ce fait, pour une broche 1 donnée que l'on fait progresser dans l'alvéole 3 pour l'usiner, les dents 2 de cette broche 1 (espacées avec un pas P donné) exercent sur les parois de l'alvéole 3 en formation des efforts alternatifs dus à l'entrée et à la sortie des dents dans cette alvéole 3.

Ces efforts alternatifs (flèches F1, F2, F3 sur la figure 1A) entraînent une variation de la direction des efforts appliqués sur la broche 1 (flèche résultante F), ainsi qu'illustré sur la figure 1B. Il en résulte une déformée de l'alvéole brochée.

Ce problème est particulièrement exacerbé dans le cas des pièces de petites dimensions.

Un but de l'invention est de résoudre cette problématique.

De nombreuses méthodes générales d'optimisation multicritères des outils de brochage ont déjà été proposées.

Généralement, les fabricants de broches s'interdisent d'utiliser des pas sous-multiple de l'épaisseur à brocher. Dans le cas en effet le plus courant où les pièces à brocher sont empilées, l'utilisation d'un pas sous-multiple de l'épaisseur à brocher est susceptible de générer des déformations importantes sur les pièces. Par généralisation, cette règle est également appliquée dans le cas où une seule pièce est brochée.

Il a par ailleurs déjà été envisagé dans l'article : Ozturk, O. & Budak, 'Modeling of broaching process for improved tool design'. Proceedings IEMCE'03, Washington, D. C., Nov.16-21 2003, p.1-11.

d'utiliser des outils de brochage avec un pas sous-multiple de l'épaisseur de la pièce.

Les auteurs indiquent dans cet article que même avec cette solution, il est extrêmement difficile d'obtenir une variation d'effort nulle entre l'entrée et la sortie d'une pièce.

Par ailleurs, cet article ne s'intéresse aucunement aux problématiques du brochage incliné.

Le document GB 839 708 A montre un procédé de brochage selon le préambule de la revendication 1.

### PRÉSENTATION GÉNÉRALE DE L'INVENTION

Un but de l'invention est notamment de réduire la variation des efforts de coupe et de réduire la déformée des alvéoles.

A cet effet, il est proposé un procédé de brochage d'au moins une alvéole dans une pièce telle qu'un disque de rotor de turbine ou un disque de compresseur de turbomachine, ladite alvéole étant usinée à l'aide d'une broche inclinée avec un angle de brochage par rapport à la pièce. Ladite broche présente un pas inter-dents sous-multiple de la longueur à brocher.

Ainsi, en prenant en compte la différence entre l'épaisseur de la pièce à brocher et la longueur à brocher qui est due à l'inclinaison du brochage, le pas inter-dents de la broche est optimisé en vue de minimiser la déformée des alvéoles.

### PRÉSENTATION DES FIGURES

D'autres caractéristiques et avantages de l'invention ressortiront encore de la description qui suit, laquelle est purement illustrative et non limitative, et doit être lue en regard des figures annexées sur lesquelles :

- les figures 1A et 1B illustrent schématiquement le brochage d'une alvéole et la variation des efforts de coupe lors de la descente de l'outil de brochage conforme à un état de la technique connue ;
- la figure 2 illustre en vue de côté un disque de rotor et une broche d'usinage d'une alvéole de type « pieds de sapin » en périphérie de ce disque ;
- la figure 3 est une vue de détail de la figure 2 ;
- la figure 4 est une vue de détail qui illustre une dent de la broche des figures 2 et 3 dans une alvéole usinée sur le disque de rotor ;
- les figures 5A et 5B illustrent un brochage d'alvéole conforme à un mode de mise en œuvre possible de l'invention, ainsi que la variation des efforts de coupe lors de la descente de l'outil de brochage, la figure 5A étant une vue similaire à celle de la figure 1, selon la ligne A-A de la figure 4.

## EXEMPLES MISE EN ŒUVRE ET DE RÉALISATION

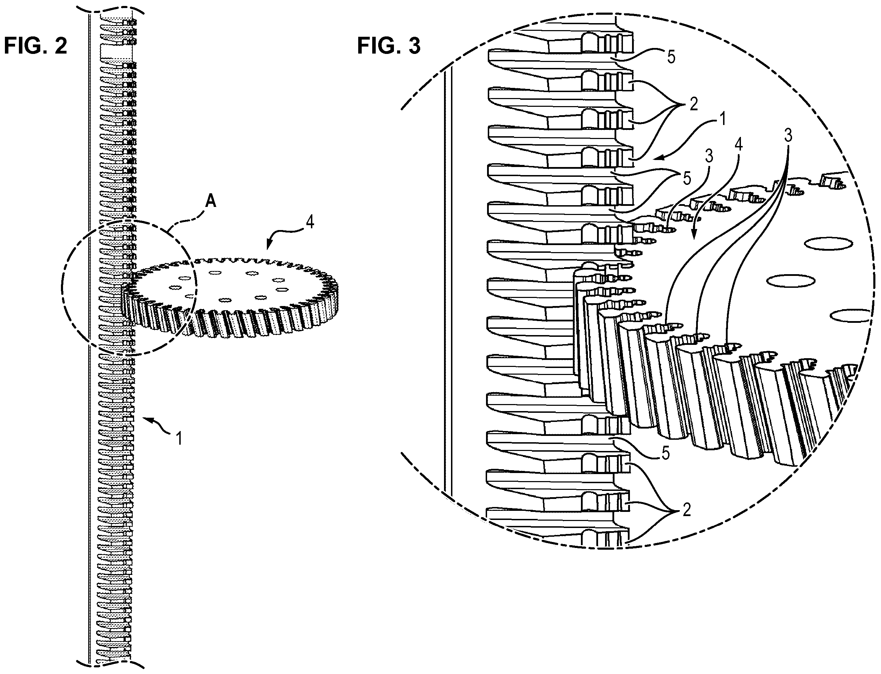

Les figures 2 à 4 représentent un disque de rotor 4 comportant une pluralité d'alvéoles 3, ainsi qu'une broche 1 utilisée pour l'usinage des alvéoles 3. Les alvéoles 3 sont en l'occurrence de forme en « pieds de sapin », d'autres formes d'alvéoles d'attache étant bien entendu possibles (formes de « bulbes » par exemple).

La broche 1 comporte une pluralité de dents 2. Deux dents successives sont séparées deux à deux par une âme 5, l'espace vide entre l'âme et le sommet de la dent constituant la chambre à copeau.

L'usinage qu'elle réalise est incliné (angle α de brochage), de sorte que l'épaisseur Ep de la pièce à brocher que constitue le disque de rotor 4 est différente de la longueur à brocher L.

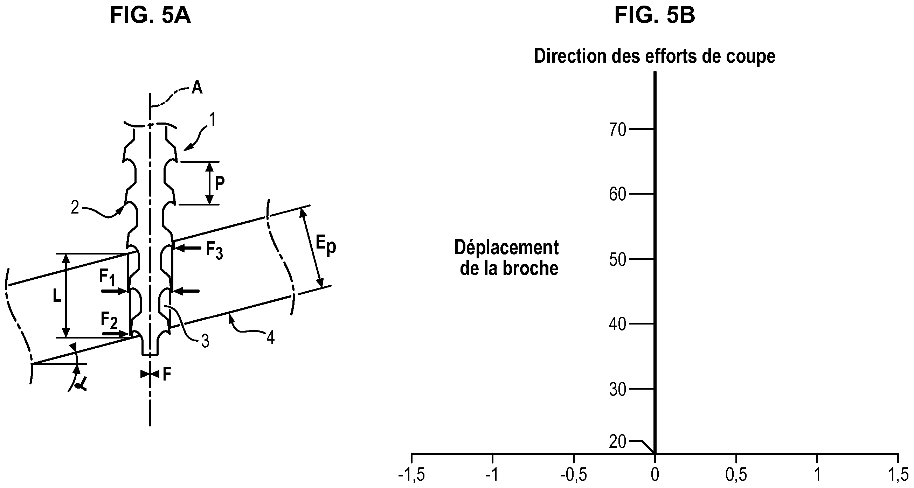

Comme l'illustre la figure 5A, la broche proposée utilise un pas de broche P sous-multiple de la longueur à brocher L.

De cette façon, une dent 2 entre dans l'alvéole 3 en formation à la périphérie de la pièce usinée (disque de rotor 4) au moment où une autre dent 2 en sort.

Les efforts (flèches F1 à F4 sur la figure 5A) des dents de coupe 2 en prise avec les parois de l'alvéole 3 usinée s'équilibrent d'un côté et de l'autre de l'alvéole 3. La variation des efforts de coupe (résultante F) est donc limitée et la composante alternative des efforts est éliminée.

Ce principe est illustré par la figure 5B qui représente le différentiel des efforts des coupes en fonction du déplacement.

En prenant en compte les intervalles de tolérance admis pour les pièces ainsi usinées, la valeur du pas est avantageusement choisi comme égal à :

$$ P = \frac{\left(\frac{ep^{max} + ep^{min}}{2}\right)}{\left(n * cos\left(\frac{\alpha^{max} + \alpha^{min}}{2}\right)\right)} $$

où :

- Ep$^{max}$ et Ep$^{min}$ sont les épaisseurs maximum et minimum de la pièce disque compte tenu du tolérancement,
- α$^{max}$ et α$^{min}$ sont les angles de brochage maximum et minimum compte tenu du tolérancement,
- *n* est le nombre de dents en prise voulu et étant un nombre entier positif.

Il est à noter que l'épaisseur Ep est déterminée pour une passe de broche 1 donnée.

Elle se calcule de jante à jante entre bords de brochage en entrée et en sortie de l'alvéole 3 usinée.

Elle est susceptible de varier selon la profondeur de l'alvéole à laquelle correspond la passe de la broche 1, un disque de rotor pouvant présenter une épaisseur variable, notamment au niveau de sa périphérie.

Les angles de brochage α sont également déterminés pour chaque passe. Ils correspondent à l'angle entre l'axe A de descente de la broche 1 et l'épaisseur de la pièce 4 au niveau de la zone brocher.

Le brochage qui vient d'être décrit est particulièrement intéressant dans le cas de disques de rotors de turbine de petites dimensions et en particulier disques avec un inter-pale réduit.

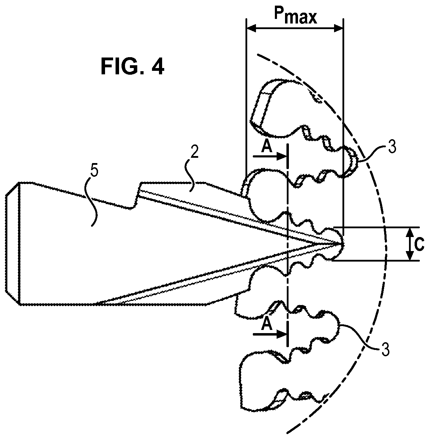

A titre d'exemple, ce brochage peut être avantageusement utilisé dans le cas de disques de turbine ou de compresseurs avec des épaisseurs inférieurs à 20 mm, une profondeur maximale d'alvéole (Pmax sur la figure 4) de l'ordre de 10 à 15mm et une largeur minimale d'alvéole (c sur la figure 4) de 2 à 3 mm.

Le nombre de dents n est alors préférentiellement égal à 2 mais pourra également être égal à 3 ou 4.

## Revendications

**1.** Procédé de brochage d'au moins une alvéole (3) dans une pièce telle qu'un disque de rotor (4) de turbine ou d'un disque de compresseur de turbomachine, ladite alvéole (3) étant usinée à l'aide d'une broche (1) inclinée avec un angle de brochage par rapport à la pièce, **caractérisé en ce que** ladite broche (1) présente un pas inter-dents (P) sous-multiple de la longueur à brocher (L).

**2.** Procédé selon la revendication 1, **caractérisé en ce que** le pas inter-dents P de broche (1) est égal à

$$ P = \frac{\left(\frac{ep^{max} + ep^{min}}{2}\right)}{\left(n * cos\left(\frac{\alpha^{max} + \alpha^{min}}{2}\right)\right)} $$

où :

- Ep$^{max}$ et Ep$^{min}$ sont les épaisseurs maximum et minimum de la pièce disque compte tenu du tolérancement,
- α$^{max}$ et α$^{min}$ sont les angles de brochage maximum et minimum compte tenu du tolérancement,
- *n* est un nombre entier positif.

**3.** Procédé selon la revendication 2, **caractérisé en ce que** n est compris entre 1 et 4.

**4.** Procédé selon la revendication 3, **caractérisé en ce**

**que** n est égal à 2.

5. Procédé selon l'une des revendications précédentes, **caractérisé en ce qu'**une alvéole (3) est une alvéole en forme de « pieds de sapin » ou en forme de « bulbes » usinée à la périphérie d'un disque de rotor (4) de turbine ou d'un disque de compresseur de turbomachine.

**Patentansprüche**

1. Verfahren zum Räumen von mindestens einem Schlitz (3) in ein Teil wie eine Turbinenläuferscheibe (4) oder eine Turbomaschinenverdichterscheibe, wobei der Schlitz (3) mit Hilfe eines in Bezug auf das Teil in einem Räumwinkel geneigten Räumwerkzeugs (1) gearbeitet wird, **dadurch gekennzeichnet, dass** das Räumwerkzeug (1) eine Bruchteil-Zwischenzahnteilung (P) der zu räumenden Länge (L) aufweist.

2. Verfahren nach Anspruch 1, **dadurch gekennzeichnet, dass** die Zwischenzahnteilung P des Räumwerkzeugs (1) gleich

$$P = \frac{\left(\frac{ep^{max} + ep^{min}}{2}\right)}{\left(n * cos\left(\frac{\alpha^{max} + \alpha^{min}}{2}\right)\right)}$$

ist, wobei:

- Ep$^{max}$ und Ep$^{min}$ die maximale und minimale Dicke des Scheibenteils unter Berücksichtigung der Toleranz sind,
- $\alpha^{max}$ und $\alpha^{min}$ der maximale und minimale Räumwinkel unter Berücksichtigung der Toleranz sind,
- n eine positive Ganzzahl ist.

3. Verfahren nach Anspruch 2, **dadurch gekennzeichnet, dass** n zwischen 1 und 4 liegt.

4. Verfahren nach Anspruch 3, **dadurch gekennzeichnet, dass** n gleich 2 ist.

5. Verfahren nach einem der vorangehenden Ansprüche, **dadurch gekennzeichnet, dass** ein Schlitz (3) ein an der Peripherie einer Turbinenläuferscheibe (4) oder einer Turbomaschinenverdichterscheibe gearbeiteter Schlitz in Form von "Tannenbaumfüßen" oder in Form von "Zwiebeln" ist.

**Claims**

1. A broaching process of at least one slot (3) in a part such as a turbine rotor disc (4) or a turbomachine compressor disc, said slot (3) being machined by means of an inclined broach (1) with a broaching angle relative to the part, **characterized in that** said broach has an inter-tooth pitch (P) as a sub-multiple of the length to be broached (L).

2. The process according to claim 1, **characterized in that** the inter-tooth pitch P of the broach (1) is equal to

$$P = \frac{\left(\frac{ep^{max} + ep^{min}}{2}\right)}{\left(n * cos\left(\frac{\alpha^{max} + \alpha^{min}}{2}\right)\right)}$$

where:

- Ep$^{max}$ and Ep$^{min}$ are the maximum and minimum thicknesses of the disc part given the tolerancing,
- $\alpha^{max}$ and $\alpha^{min}$ are the maximum and minimum broaching angles given the tolerancing,
- n is a positive whole number.

3. The process according to claim 2, **characterized in that** n is between 1 and 4.

4. The process according to claim 3, **characterized in that** n is equal to 2.

5. The process according to one of the preceding claims, **characterized in that** a slot (3) is a slot in the form of "fir tree sections" or in the form of "bulbs" machined at the periphery of a turbine rotor disc or a turbomachine compressor disc.

EP 2 950 957 B1

## FIG. 1A

## FIG. 1B

**Direction des efforts de coupe**

Déplacement
de la broche

FIG. 3

FIG. 2

FIG. 4

EP 2 950 957 B1

## FIG. 5A

## FIG. 5B

### Direction des efforts de coupe

## RÉFÉRENCES CITÉES DANS LA DESCRIPTION

**Documents brevets cités dans la description**

- GB 839708 A

**Littérature non-brevet citée dans la description**

- **OZTURK, O. ; BUDAK.** Modeling of broaching process for improved tool design. *Proceedings IEMCE'03,* 16 Novembre 2003, 1-11